# EUROPEAN PATENT SPECIFICATION

(11) **EP 2 332 214 B1**
(45) Date of publication and mention of the grant of the patent: **06.05.2020**
(21) Application number: 09813391.1
(22) Date of filing: 14.05.2009
(51) Int. Cl.: H01Q 1/38, H01Q 1/24, G06K 19/077, H01Q 1/22, H01Q 21/00, H01Q 13/20, H01Q 21/24

(54) **ELONGATED TWIN FEED LINE RFID ANTENNA WITH DISTRIBUTED RADIATION PERTURBATIONS**
LÄNGLICHE RFID-ANTENNE MIT DOPPELVERSORGUNGSLEITUNG UND VERTEILTEN STRAHLUNGSSTÖRUNGEN
ANTENNE RFID À LIGNE D' ALIMENTATION DOUBLE ALLONGÉE ET À PERTURBATIONS RAYONNANTES DISTRIBUÉES

(30) Priority: 02.03.2009 US 395748; 11.09.2008 US 191687 P
(43) Date of publication of application: 15.06.2011
(73) Proprietor: Wistron NeWeb Corporation, Hsinchu 308 (TW); Ohio State University Research Foundation, Columbus, OH 43212 (US)
(72) Inventor: BURNSIDE, Walter, D., Dublin OH 43017 (US); BURKHOLDER, Robert, J., Columbus OH 43212 (US); TSAI, Feng-Chi, Eddie, Zhubei City Hsinchu 302 (TW)
(74) Representative: Findlay, Alice Rosemary
(86) International application number: PCT/US2009/043871
(87) International publication number: WO 2010/030414

(56) References cited:
- EP-A1- 1 855 352
- WO-A1-2007/058619
- WO-A1-2008/143673
- GB-A- 378 642
- GB-A- 887 555
- JP-A- 2006 042 240
- KR-A- 20060 024 336
- US-A- 1 821 402
- US-A- 2 031 065
- US-A- 5 859 616
- US-A- 5 859 616
- US-A1- 2004 032 369
- US-B1- 6 956 472
- Constantine A. Balanis: "Chapter 6: Arrays: Linear, Planar, and Circular" In: "ANTENNA THEORY: ANALYSIS AND DESIGN", 1 January 2005 (2005-01-01), JOHN WILEY AND SONS, HOBOKEN, NEW JERSEY, XP055572087, ISBN: 978-0-471-66782-7 pages 296-313,
- Ee Times: "RFID Basics: Antenna Gain and Range | EE Times", , 16 October 2007 (2007-10-16), XP055572587, Retrieved from the Internet: URL:https://www.eetimes.com/document.asp?d oc_id=1276310# [retrieved on 2019-03-21]

## Description

### BACKGROUND OF THE INVENTION

The invention pertains to radio frequency identification (RFID) systems and, in particular, to an improved antenna for such applications.

### PRIOR ART

RFID technology is expected to greatly improve control over the manufacture, transportation, distribution, inventory, and sale of goods. A goal, apparently not yet realized on a widespread scale, is the identification of goods down to a unit basis at a given site. To accomplish this goal, each item will carry a unique tag that, when it receives radiation from an RFID antenna, will send back a modulated unique signal verifying its presence to the antenna. The antenna, in turn, receives this transmitted signal and communicates with a reader that registers reception of this signal and, therefore, the presence and identity of the subject item.

Typically by its nature, an RFID tag identifying a subject item is polarized so that its response to a radio signal will depend on its alignment with the polarization of the signal radiated by the RFID antenna. Items can be expected to be randomly positioned in the space being surveyed by the RFID system and, therefore, the system should be capable of reading these items. Signal fading due to interference, absorption, reflection and the like can adversely affect the ability of an RFID antenna to reliably read an RFID tag. These conditions make it desirable to be able to transmit as much electromagnetic signal power as government regulations allow.

An RFID antenna should be relatively inexpensive to produce, practical to handle and ship, and be simple to install. Additionally, the antenna should be unobtrusive when installed and, ideally, easily concealed.

US 6956472B2 discloses an automobile hang tag with an integral radio transponder. The tag may include a stacked dipole antenna.

EP 1855352A1 discloses an antenna apparatus and article management system capable of reading information of a plurality of wireless tags.

US 5859616A discloses an antenna system comprising first and second dipole elements on a first dielectric surface, with the second dipole element being adjacent and at an angle to the first dipole element. A pair of feed lines are provided on a second dielectric surface which is parallel to and spaced from the first surface. A first of the pair of feed lines is proximity coupled to the first dipole element and a second of the pair of feed lines is proximity coupled to the second dipole element.

WO 2007/058619A1 discloses an RFID antenna that comprises first and second shaped transmission line segments arranged along an axis on a substrate.

US 2031065A, GB 378642A, GB 887555A and US 1821402A each disclose an antenna comprising branch radiators arranged along a twin feed line.

### SUMMARY OF THE INVENTION

The invention is defined by the claims.

The invention provides a novel RFID antenna structure particularly suited for reading RFID tags at the item level. The antenna is capable of reading such tags in a near zone as they exist in storage, display or as they pass through a control zone such as a door or other portal, whether or not in bulk and/or in random orientation. The antenna of the invention produces radio frequency electric field beams of diverse polarization and direction. This diversity ensures that at least some beam component with a polarization matching that of each RFID tag will illuminate such a tag to ensure that a signal can be generated by the tag and thereby be detected.

In a preferred embodiment, the antenna is an elongated structure producing a near-field radiation that is used to monitor a cylindrical or semi-cylindrical zone. The axis of the antenna is located at or adjacent to the axis of the cylindrical zone to be monitored. By way of example, the antenna can be arranged vertically. In this configuration, the antenna is capable of monitoring nearby shelves, pallets, display cabinets, or doorways, for example.

The antenna comprises twin-feed lines extending along an elongated axis and perturbations or radiators spaced along the length of the antenna. The feed lines can comprise a pair of spaced, preferably flat, coplanar conductors, and the radiators can extend as branches or stubs laterally from the feed lines.

In the preferred embodiments, the stubs are skewed with respect to the antenna axis. The skew or angularity of the stubs relative to the axis develops a favorable polarization pattern. The feed line conductors, ideally, are disposed along a serpentine path, centered about the axis that reduces interference with radiation patterns from the stubs by orienting the stubs normal or nearly normal to the feed lines.

The preferred antenna arrangement is characterized by diversity of both electric field polarization and beam direction, and at the same time a relatively uniform signal strength coming from each radiator. This beam diversity enables the antenna to be driven and radiate at a high power level, without violating Federal Communication Commission (FCC) rules, to ensure RFID tag illumination and, therefore, reliable tag reading. The beam diversity of direction and polarization obtained by the preferred antenna construction, additionally, enhances performance by ensuring that an RFID tag in the antenna operating range with any orientation will be illuminated with an aligned polarized beam. Beam diversity is further increased by using multiple antennas to cover the same zone.

The skewed polarization and beam separation characteristic of the preferred antenna enables an identical antenna or antennas to be flipped on its axis and/or inverted relative to a first antenna to further increase the beam diversity in both polarization and direction.

In the preferred embodiment, the beam diversity is obtained in a counter-intuitive manner by scanning the beams of signal components polarized in the vertical or axial direction of the antenna while the signal components polarized in directions perpendicular to the antenna axis radiate in beams nearly perpendicular to the antenna axis.

### BRIEF DESCRIPTION OF THE DRAWINGS

FIG. 1 is an elevational view, in a midplane, of a preferred embodiment of an antenna of the invention;
FIG. 2 is a fragmentary enlarged view of the antenna of FIG. 1 showing near zone electric fields;
FIG. 3 is a fragmentary cross-section of the antenna taken at the plane 3-3 in FIG. 1;
FIG. 4 is a schematic diagram of horizontally and vertically polarized beams radiated from the antenna;
FIG. 5 is an illustration of the feed or input end of the antenna;
FIG. 6 illustrates the use of adjacent identical antennas with different orientations;
FIG. 7 illustrates an arrangement useful for covering a semi-cylindrical zone on one side of the antenna;
FIG. 8 is an alternative antenna construction;
FIG. 9 is a second alternative antenna construction;
FIG. 10 is a third alternative antenna construction; and
FIG. 11 shows use of two of the antennas of the type shown in FIG. 10.

### DESCRIPTION OF THE PREFERRED EMBODIMENT

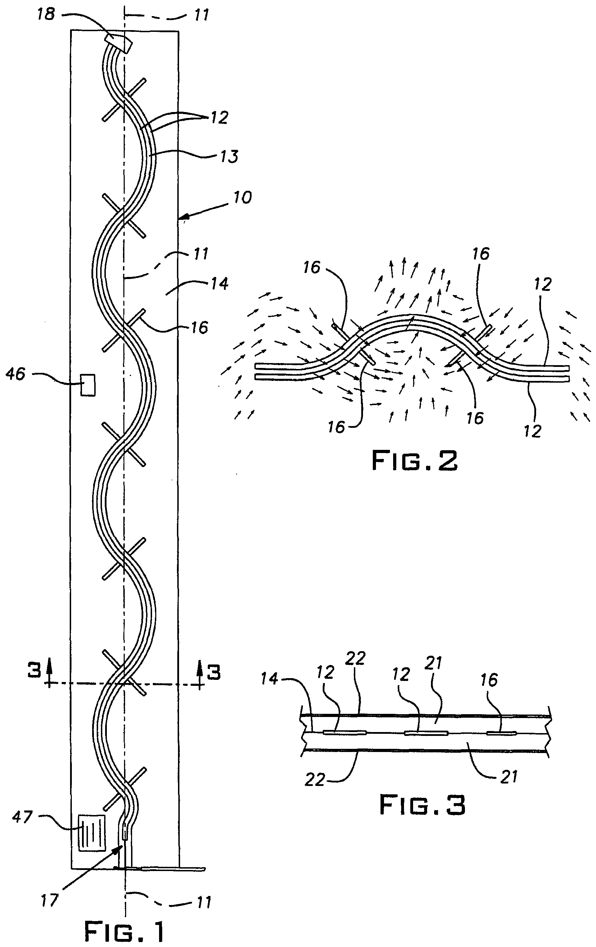

FIG. 1 illustrates a preferred form of an RFID antenna 10. The antenna is elongated along a longitudinal axis 11. The antenna 10 includes a pair of coplanar twin ribbon-like conductors or strips 12 having a gap or space 13 therebetween. The conductors 12, also referred to herein as feed lines, are made of copper or aluminum, for example, and can be relatively thin self-supporting foil or can be printed, deposited, or otherwise fabricated on a thin carrier film 14 of suitable dielectric material such as Mylar®, or etched from a printed circuit board.

Preferably at uniformly spaced locations along the length of the antenna 10 are pairs of stubs (i.e. dipoles) or branch radiators 16, each stub of a pair being in electrical continuity with an associated one of the conductors or feed lines 12. The stubs 16 are conveniently formed conductors such as the same material used for the feed lines 12, are coplanar with the feed lines, and are integrally formed with these lines so as to ensure electrical continuity with these lines.

In one antenna design intended for use to monitor space within a room, the antenna has a nominal length of about 7' (2.1336m) and the antenna is used with its axis 11 upright or vertical. The conductors 12 are each about ½" (12.7mm) wide and the space or gap 13 between them is about 1/8" (3.175mm). The stubs 16 conductor width is used to adjust the radiator's bandwidth. For typical applications the stubs are somewhat narrower than the feed lines and their lengths can be varied from about 2" (50.8mm) at a feed end of the antenna 10 to about 3" (76.2mm) at the terminal end. In a 7' (2.1336m) antenna length seven pairs or dipoles of stubs 16 are used with a spacing of about 12" (304.8mm) measured along the axis 11 of the antenna. The distance from a feed or feed matching section 17 described below, to the first pair of stubs 16 is about 4" (101.6mm) measured along the center of the gap 13 and the distance from the last pair of stubs 16 can be about 2" (50.8mm) from a short 18 between the conductors 12 forming the termination of the antenna. Alternatively, the termination can be an open circuit or an impedance load. Note that the impedance termination can also create radiation, which can be used to excite RFID tags.

FIG. 3 is a cross-sectional view of the antenna 10 illustrating a sandwich-like construction. The conductors 12 and the stubs 16 are printed, laminated, or otherwise disposed on the carrier film 14 between two low density dielectric boards or panels 21. Alternatively, the conductors 12 and stubs 16, if sufficiently self-supporting, can be laminated directly to one of the boards 21 so as to eliminate the film 14. As another alternative, the conductors 12 and stubs 16 can be printed directly on a board 21. The boards 21 can be extruded low-density, (1.5 lbs/ft3) polystyrene foam for instance. Protective heavy plastic film 22, for example .040" (1.016mm) thick, is held firmly or bonded on the exterior surfaces of the foam boards 21. The boards 21, conductive strips 12, stubs 16, any film 14, and film 22 can be solidly held and/or bonded by suitable adhesives together to produce a relatively rigid antenna package, if desired. The presence of the boards 21 ensures that surrounding structures, materials or goods are not so close to the antenna 10 when it is installed as to significantly adversely affect the performance of the antenna.

The stubs or radiators 16, have an orientation that is skewed at an angle to the axis 11 of the antenna. Ideally, the stubs 16 lie at an angle of about 45° with respect to the axis 11. The two stubs or branches 16 forming a dipole at each location along the length of the antenna 10 are preferably in alignment such that both lie along a common line.

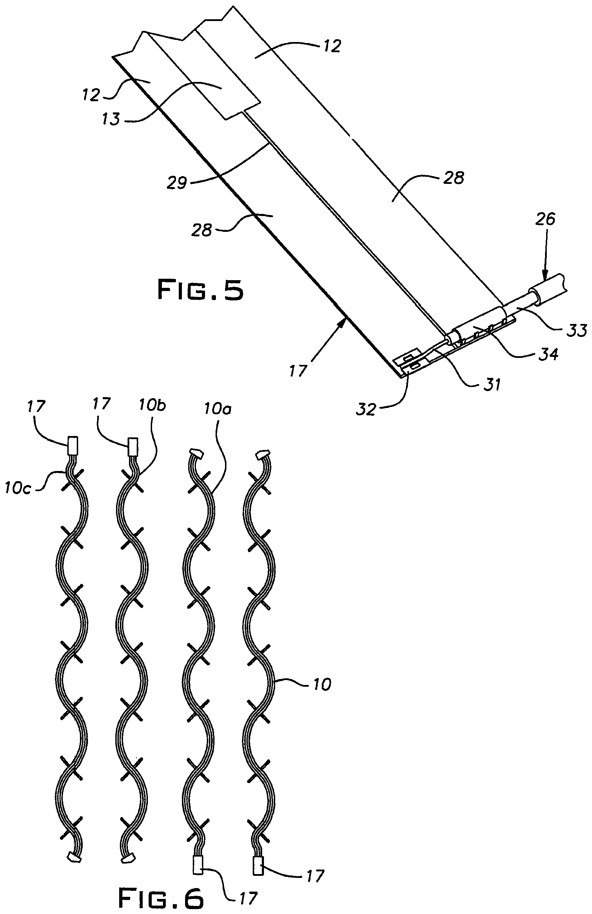

FIG. 5 shows a manner of feeding the antenna 10 from a coax cable 26. A feed matching section 17, in the form of a quarter wavelength impedance transformer, includes two conductive strips 28 on a suitable thin nonconductive substrate such as the Mylar® sheet 14 on which the antenna feed lines 12 are carried. The strips 28 are electrically connected to the feed line conductors 12 and are separated by a narrow gap 29 of about 1 mm. A center conductor 31 of the coax cable 26 is electrically connected to one of the strips 28 such as by a mechanical connector in the form of a metal clamp 32 with integral barbs that, after piercing the respective strip, are crimped tightly against the underside of the film 14 carrying the strip or if the strip is self-supporting, against the opposite side of the strip. An outer conductor 33 of the coax cable 26 is similarly electrically connected to the other strip 28 by an associated metal clamp or connector 34. The metal clamps or connectors 32, 34, may be soldered between their respective conductors 31, 33 and feed strips 28, to assure a reliable electrical connection between these elements. Because of the stepped nature of the quarter wavelength impedance transformer, it tends to radiate a small signal level as well. Even this small radiation can be useful for RFID applications as discussed here.

Inspection of FIG. 1 shows that pairs of stubs or branches 16 alternate from a positive slope (the first, third, fifth, and seventh stub pairs) to a negative slope (the second, fourth, and sixth stub pairs). The feed lines 12 act as a two-wire transmission line, from which it is well known that the current on one feed line is out of phase by 180° to the current in the other feed line. This allows the currents in each pair of the stubs 16 to be in phase and, therefore, produce radiated signals that reinforce one another. The short between the feed lines 12 at the terminal end 18 is about a ¼ wavelength or less from the last pair of stubs 16.

The serpentine path of the feed lines 12 has been found to advantageously limit the influence these lines would otherwise generally have on the directional character and strength of the radiated signals produced by the stubs 16. The serpentine configuration of the feed lines 12 serves to space the distal or free ends of the stubs 16 from the feed lines and produces the ideal electric field patterns shown in FIG. 2.

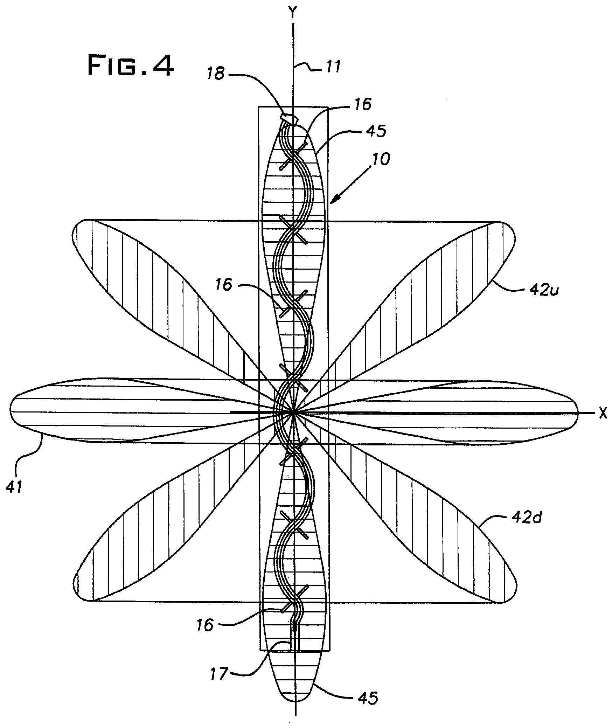

Radiation from a stub 16 is polarized parallel or nearly parallel to the stub. In FIGS. 1 and 4, the stubs, i.e. dipoles 16 are arranged at an angle of +45° or -45° to the axis 11. Radiation of the angled stubs 16 has both horizontal and vertical components in the sense that the axis 11 of the antenna 10 is vertically oriented. The horizontally polarized radiation components of all of the stubs 16 of the antenna 10 are all polarized in the same direction and roughly in-phase such that they create radiation beams 41 that are nearly perpendicular to the antenna axis 11. In addition, horizontally polarized beams 45 are end fire beams produced as a consequence of the nearly full wavelength spacing between the stubs or radiators 16. On the other hand, the vertically polarized radiation components of adjacent stubs 16 are in opposite directions and therefore oppose one another. The interaction of these opposing vertically polarized radiation components produces scanned conical beams tilted off the plane perpendicular to the axis 11 by about ± 40°, the angle depending in part on the proximity of the stubs 16 to one another. This phenomenon is schematically depicted in FIG. 4 where horizontally polarized signal components travel in beams 41 nearly perpendicular to the antenna axis 11 and in the end fire direction; whereas, the vertically polarized signal components are radiated in terms of tilted conical beams 42u and 42d. Because of the complex phasing action between all the stubs and termination, these beams will not all be excited to the same radiation level. Thus, FIG. 4 is an oversimplification and in-use of the antenna the RFID tagged items are illuminated in the near zone of the antenna. FIG. 4 is depicting the horizontally and vertically polarized radiation beams as seen in the far field of the antenna.

From this analysis, it will be understood that the antenna 10 is characterized by a high degree of radiation diversity in the near zone where it operates. The antenna 10 affords both vertically and horizontally polarized signal components, and these signal components are directed in widely divergent beam paths. This diversity reduces the risk of signal fading in areas of the space or zone the antenna 10 is intended to illuminate or survey. Further, the separation of the vertically and horizontally polarized beams 41, 42, 45 allows the antenna to be efficiently driven with a maximum wattage without violating FCC regulations because the power is not concentrated in a single beam, thus providing an effective and inexpensive antenna unit composed of multiple radiators. References to vertical and horizontal orientation throughout this disclosure are for convenience in the explanation, but it will be understood that the antenna 10 can be used in any orientation and the planes of polarization and beam direction will be similarly reoriented.

The 45° degree angle of the stubs 16 to the longitudinal axis 11 is of great benefit because it allows a duplicate antenna to be flipped over 180° about its axis relative to a first antenna and produce radiation polarization in planes that are orthogonal to the polarization planes of the first antenna. This arrangement, which significantly improves the signal polarization and beam diversity, is shown by the side-by-side placement of the antenna 10 and the antenna 10a in FIG. 6. For even greater radiation diversity, antenna 10b can be inverted and for still further diversity, a fourth duplicate antenna 10c can be flipped on its axis and inverted adjacent to the antenna 10. Any combination of two or more of the antenna orientations depicted in FIG. 6 can be used. For greatest effectiveness, each of the provided antennas 10, 10a, 10b, and/or 10c, where more than one is used, is operated alone in a sequence with the other(s).

An RFID tag 46 is preferably permanently attached to the antenna 10 and is unique to the particular antenna to which it is attached. Still further, a non-RF machine readable tag 47, again unique to the particular antenna, like an optically readable UPC label or a magnetically encoded tag is also preferably attached to the antenna 10. When the antenna is installed, a technician can scan the non-RF tag 47 and thereby electronically record its location and RFID tag identity at the installation site. At any time thereafter, a reader system can test a particular antenna (with its identity and location previously stored in an electronic memory) by driving it and determining if it senses its own RFID tag.

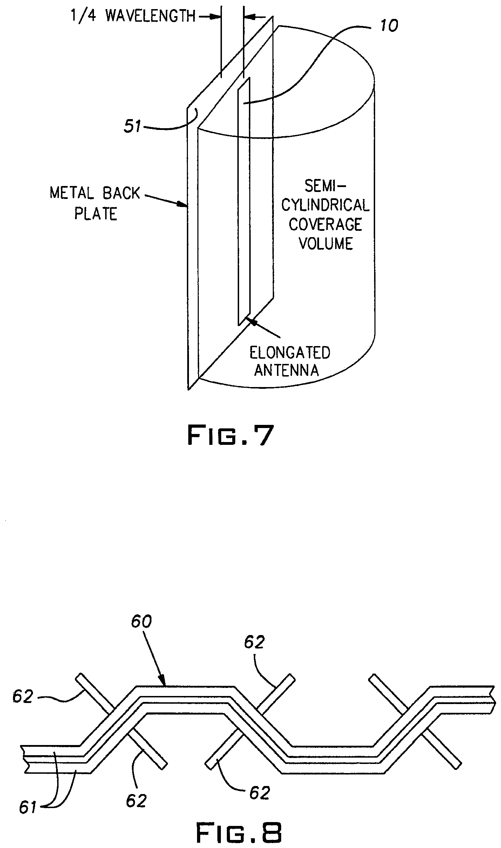

FIG. 7 diagrammatically illustrates an antenna 10 arranged to monitor a semi-cylindrical zone. As shown, a conducting metal plate 51 is spaced some distance (which is normally close to one-quarter wavelength) behind the vertical antenna 10. Reflection from the conducting plate 51 reinforces the forward radiation while blocking back radiation. It will be appreciated that rather than a single antenna, multiple antennas such as arranged in FIG. 6 can be used in the installation depicted in FIG. 7.

In FIGS. 8 - 11, antenna constructions can employ ribbon-like feed lines and radiation areas like those described in connection with FIGS. 1 - 3 and can be mounted and protected in the same way. FIG. 8 is a fragmentary view of a portion of an antenna 60 with parallel feed lines 61 segments and dual stub radiators 62. The antenna 60 obtains a desired 45° polarization although the abrupt bends in the feed lines 61 may also radiate energy.

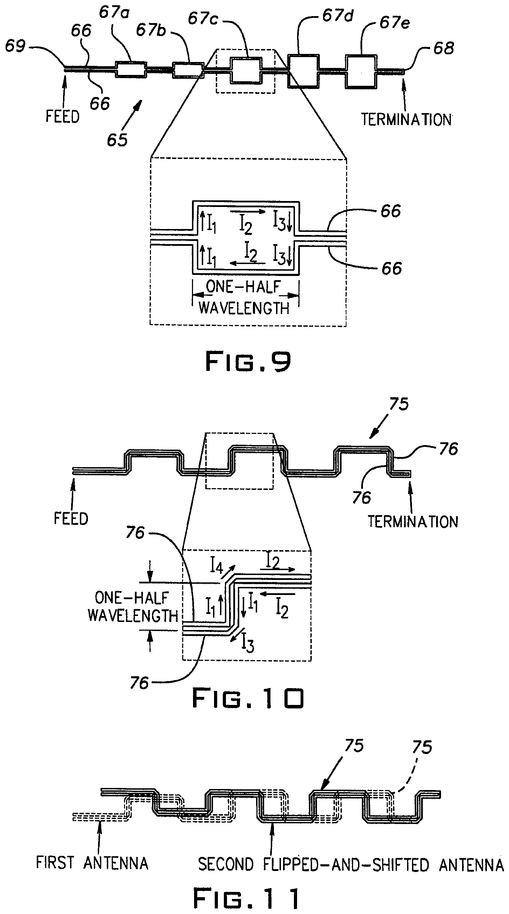

Referring now to FIG. 9, there is shown an example of an antenna 65 wherein coplanar strip feed lines or conductors 66 are arranged to cause radiation from the half wavelength sections 67a-e. As shown in FIG. 9, the rectangular radiators 67a-e are wider near a termination end 68 as compared to the feed end 69. The spacing between the feed lines 66 changes abruptly for roughly a half wavelength section and then changes back to the original spacing. The currents in the feed lines behave similarly to a loop or patch antenna. Currents travel in opposite directions in the two coplanar feed lines 66. Therefore, the currents I₁, I₂, and I₃, have the directions shown in FIG. 9 in each feed line or strip 66. The fields radiated by the currents I₂ flowing in opposite directions in the two parallel lines 66 will tend to cancel. The field of currents I₁ flowing in the two collinear lines or strips 66 will not cancel each other because they are in phase and flowing in the same direction. The same is true for I₃. The fields of currents I₁ and I₃ do not cancel each other because there is a 180° phase shift due to the half wavelength spacing along the feed line. This gives the antenna 65 a strong polarization component normal to the axis of the feed lines 66. The antenna 65 does not have the 45° polarization of the earlier disclosed embodiments but represents an antenna design using the basic configuration of coplanar strip feed lines.

Referring now to FIG. 10, an antenna 75 having dual feed lines 76, produces radiation from bends in the feed lines. The fields radiated by currents I₁ in the two parallel strips will cancel because they are equal and opposite, as will the currents I₂. However, the fields radiated by currents I₃ and I₄ will not cancel each other because of the 180° phase shift due to the half wavelength separation along the feed line. The radiation from I₃ and I₄ has the desired 45° polarization. The power radiated by I₃ and I₄ may be controlled by reducing the offset distance to less than a half wavelength. As the currents get closer together their radiated fields will tend to cancel each other. Another way to control the radiation level at a junction is to vary the bend angle. The bend angle shown in FIG. 10 is 90°. If the angle is reduced, such as the 45° angle shown in FIG. 8, the radiation will be reduced relative to that radiated by a 90° bend.

Because of the ± 45° polarization of the alternating bend embodiment of FIG. 10, it is possible to combine this antenna 75 with a second identical antenna flipped 180° about its axis. The second antenna 75 will provide orthogonal polarization and may be mounted relatively close to the first antennas shown in FIG. 11. This concept is shown for antenna 75, but it could be used for antenna 10 or 60 as well. Here, the second antenna is shown directly over the first antenna, and can even be shifted one-half period along the axis. For antennas 10 and 60, the second antenna could be rotated 180 degrees about its axis to create the orthogonal polarization as well. The two antennas can be separated using a low density dielectric panel or foam, for example, that is thick enough to prevent excessive coupling between the two feed lines. In this manner, two antennas can be easily mounted in the same package with two ports or feeds.

While the invention has been shown and described with respect to particular embodiments thereof, this is for the purpose of illustration rather than limitation. The scope of protection is defined by the appended claims.

## Claims

1. An RFID antenna comprising an elongated structure existing along an axis and including twin feed lines (12, 61, 66, 76) of electrically conductive material, the feed lines (12, 61, 66, 76) being in a common plane and being generally uniformly laterally spaced from one another at areas along a length of the antenna, and a plurality of radiating perturbations (16, 62) associated with the feed lines (12, 61, 66, 76) at a plurality of locations spaced along the feed lines (12, 61, 66, 76), wherein the elongated structure is long compared to a signal wavelength at an RFID design frequency; the feed lines (12, 61, 66, 76) are ribbon-like, and at each location, each feed line (12, 61, 66, 76) has a perturbation (16, 62), the perturbations (16, 62) being spaced about one wavelength at the RFID design frequency;
wherein said perturbations are branch radiators (16, 62) in electrical communication with their respective feed line (12, 61), wherein said branch radiators (16, 62) are disposed at angles with respect to the axis, and wherein alternate pairs of said branch radiators (16, 62) have a positive angle with respect to the axis and intervening pairs of branch radiators (16, 62) have a negative angle with respect to the axis.

2. An RFID antenna as set forth in claim 1, wherein said feed lines (12) are sandwiched between and protected by two low density dielectric panels (21).

3. An RFID antenna as set forth in claim 2, wherein said feed lines (12) are carried on a thin dielectric film (14) disposed between said panels (21).

4. An RFID antenna as set forth in claim 1, wherein said branch radiators (16, 62) are disposed at an angle of about 45° with respect to the axis.

5. An RFID antenna as set forth in claim 1, wherein said feed lines (12) follow a serpentine pattern centered on the axis.

6. An RFID antenna as set forth in claim 5, wherein said branch radiators (16) are located at adjacent points where the feed lines (12) cross the axis.

7. An RFID antenna as set forth in claim 1, including an RFID tag (46) permanently attached to the antenna and having a unique identity associated with the antenna.

## Patentansprüche

1. RFID-Antenne, umfassend ein längliches Gebilde, das entlang einer Achse besteht und Zwillingszuleitungen (12, 61, 66, 76) aus elektrisch leitendem Material aufweist, wobei die Zuleitungen (12, 61, 66, 76) in einer gemeinsamen Ebene sind und an Bereichen an einem Längsabschnitt der Antenne entlang allgemein gleichmäßig seitwärts voneinander beabstandet sind, und mehrere mit den Zuleitungen (12, 61, 66, 76) assoziierten strahlenden Störungen (16, 26) an mehreren Stellen, die an den Zuleitungen (12, 61, 66, 76) entlang beabstandet sind,
wobei das längliche Gebilde verglichen mit einer Signalwellenlänge bei einer RFID-Entwurfsfrequenz lang ist; die Zuleitungen (12, 61, 66, 76) bandähnlich sind und an jeder Stelle jede Zuleitung (12, 61, 66, 76) eine Störung (16, 62) hat, wobei die Störungen (16, 62) etwa eine Wellenlänge bei der RFID-Entwurfsfrequenz beabstandet sind;
wobei die genannten Störungen Zweigstrahler (16, 62) in elektrischer Kommunikation mit ihrer jeweiligen Zuleitung (12, 61) sind,
wobei die genannten Zweigstrahler (16, 62) in Winkeln in Bezug auf die Achse angeordnet sind und wobei abwechselnde Paare der genannten Zweigstrahler (16, 62) einen positiven Winkel in Bezug auf die Achse haben und dazwischenliegende Paare von Zweigstrahlern (16, 62) einen negativen Winkel in Bezug auf die Achse haben.

2. RFID-Antenne nach Anspruch 1, wobei die genannten Zuleitungen (12) zwischen bzw. von zwei dielektrischen Platten (21) niedriger Dichte zwischengelegt sind und geschützt werden.

3. RFID-Antenne nach Anspruch 2, wobei die genannten Zuleitungen (12) auf einer dünnen dielektrischen Schicht (14) getragen werden, die zwischen den genannten Platten (21) angeordnet ist.

4. RFID-Antenne nach Anspruch 1, wobei die genannten Zweigstrahler (16, 62) in einem Winkel von etwa 45° in Bezug auf die Achse angeordnet sind.

5. RFID-Antenne nach Anspruch 1, wobei die genannten Zuleitungen (12) einem auf die Achse zentrierten Schlangenlinienmuster folgen.

6. RFID-Antenne nach Anspruch 5, wobei die genannten Zweigstrahler (16) sich an benachbarten Punkten dort, wo die Zuleitungen (12) die Achse überqueren, befinden.

7. RFID-Antenne nach Anspruch 1 mit einem RFID-Transponder (46), der fest an der Antenne angebracht ist und eine der Antenne zugeordnete eindeutige Kennung hat.

## Revendications

1. Antenne RFID comprenant une structure allongée s'étendant le long d'un axe et comportant des lignes d'alimentation double (12, 61, 66, 76) dans un matériau électriquement conducteur, les lignes d'alimentation (12, 61, 66, 76) se trouvant dans un plan commun et étant espacées latéralement l'une de l'autre de manière généralement uniforme au niveau de zones le long d'une longueur de l'antenne, et une pluralité de perturbations rayonnantes (16, 62) associée aux lignes d'alimentation (12, 61, 66, 76) au niveau d'une pluralité d'emplacements espacés le long des lignes d'alimentation (12, 61, 66, 76), dans lequel la structure allongée est longue en comparaison à une longueur d'onde de signal à une fréquence théorique RFID ; les lignes d'alimentation (12, 61, 66, 76) sont du type ruban, et à chaque emplacement, chaque ligne d'alimentation (12, 61, 66, 76) présente une perturbation (16, 62), les perturbations (16, 62) étant espacées autour d'une longueur d'onde à la fréquence théorique RFID ;
dans laquelle lesdites perturbations sont des branches rayonnantes (16, 62) en communication électrique avec leur ligne d'alimentation respective (12, 61),
dans laquelle lesdites branches rayonnantes (16, 62) sont disposées à des angles par rapport à l'axe, et dans lequel des paires alternées desdites branches rayonnantes (16,62) forment un angle positif par rapport à l'axe et des paires intermédiaires de branches rayonnantes (16, 62) forment un angle négatif par rapport à l'axe.

2. Antenne RFID selon la revendication 1, dans laquelle lesdites lignes d'alimentation (12) sont prises en sandwich entre deux panneaux diélectriques de faible densité (21) et protégées par ceux-ci.

3. Antenne RFID selon la revendication 2, dans laquelle lesdites lignes d'alimentation (12) sont portées sur un film diélectrique mince (14) disposé entre lesdits panneaux (21).

4. Antenne RFID selon la revendication 1, dans laquelle lesdites branches rayonnantes (16,62) sont disposées à un angle d'environ 45° par rapport à l'axe.

5. Antenne RFID selon la revendication 1, dans laquelle lesdites lignes d'alimentation (12) suivent un motif sinueux centré sur l'axe.

6. Antenne RFID selon la revendication 5, dans laquelle lesdites branches rayonnantes (16) sont disposées à des points adjacents où les lignes d'alimentation (12) franchissent l'axe.

7. Antenne RFID selon la revendication 1, comportant une étiquette RFID (46) fixée en permanence à l'antenne et ayant une identité unique associée à l'antenne.
